# EUROPÄISCHE PATENTSCHRIFT

(11) **EP 4 426 993 B1**
(45) Veröffentlichungstag und Bekanntmachung des Hinweises auf die Patenterteilung: **03.06.2026**
(21) Anmeldenummer: 22805859.0
(22) Anmeldetag: 20.10.2022
(51) Int. Cl.: G01B 11/24, G01B 11/25

(54) **VERFAHREN ZUR OPTISCHEN VERMESSUNG VON TECHNISCHEN OBERFLÄCHEN UND VORRICHTUNG ZUR DURCHFÜHRUNG DES VERFAHRENS**
METHOD FOR OPTICALLY MEASURING TECHNICAL SURFACES, AND DEVICE FOR CARRYING OUT THE METHOD
PROCÉDÉ DE MESURE OPTIQUE DE SURFACES TECHNIQUES ET DISPOSITIF POUR LA MISE EN ?UVRE DU PROCÉDÉ

(30) Priorität: 02.11.2021 DE 102021128444
(43) Veröffentlichungstag der Anmeldung: 11.09.2024
(73) Patentinhaber: Breitmeier Messtechnik GmbH, 76275 Ettlingen (DE)
(72) Erfinder: WEBER, Mark Alexander, 47506 Neukirchen-Vluyn (DE)
(74) Vertreter: Schoenen, Norbert
(86) Internationale Anmeldenummer: PCT/EP2022/079294
(87) Internationale Veröffentlichungsnummer: WO 2023/078690

(56) Entgegenhaltungen:
- WO-A1-2010/145669
- US-B1- 6 229 913

## Beschreibung

Die Erfindung betrifft ein Verfahren zur optischen Vermessung von technischen Oberflächen mit Hilfe eines konfokalen Sensors, wobei Licht einer Lichtquelle (11) über ein optisches System auf eine zu vermessende Probenoberfläche gerichtet wird, wobei das optische System eine Beleuchtungsmaske (13), eine Sensormatrix (15), einen Strahlteiler (14) zur Vereinigung von Beleuchtungsstrahlengang und Detektionsstrahlengang und eine Abbildungsoptik (6) enthält, wobei die Beleuchtungsmaske (13) aus schachbrettmusterartig angeordneten transparenten Bereichen (1) und nicht oder gering transparenten Bereichen (2) besteht, wobei der Pitch (3) des Musters auf der Beleuchtungsmaske (13) dem Pixelpitch (24) der Sensormatrix (15) entspricht und wobei die Beleuchtungsmaske (13) und die Sensormatrix (15) so zueinander justiert sind, dass die transparenten Bereiche (1) und die Pixel der Sensormatrix (15) mittels der Abbildungsoptik (6) gleichzeitig scharf auf die Probe (7) abgebildet werden, wodurch dann das scharfe Abbild der Beleuchtungsmaske (13) auf die Sensormatrix (15) scharf abgebildet wird, sodass hier ein schachbrettartiges Muster aus heller und dunkler beleuchteten Pixeln entsteht.

Die Erfindung betrifft außerdem eine Vorrichtung zur Durchführung des Verfahrens.

### Hintergrund

Bisher üblich ist die Realisierung der flächenhaften konfokalen Abbildung durch das Zusammenführen von Beleuchtung und Detektion mittels Strahlteiler und danach das Einbringen des Konfokalfilters. Dieser ist z.B. eine rotierende Multipinholescheibe (Nipkowscheibe), ein mit Pinholes versehenes festes Pinholemuster, ein Mikrolinsenarray oder die Kombination aus Mikrolinsenarray und Pinholemuster, bzw. rotierender Multipinholescheibe. Durch die Mikrolinsen kann die Transparenz des Konfokalfilters gezielt erhöht werden, allerdings ist der Herstellungsprozess für diese Lösung technologisch anspruchsvoll und die Mikrolinsen können einen negativen Einfluss auf die optische Abbildungsqualität des Gesamtsystems haben.

Üblicherweise haben Konfokalfilter ohne Mikrolinsen eine Transparenz unter 5%, weswegen sehr leistungsstarke Lichtquellen verwendet werden müssen und im Gerät vor dem Konfokalfilter häufig störende Lichtreflexe auftreten. Die Geschwindigkeit des Systems ist neben der Bildfrequenz der Kamera durch die benötigte Beleuchtungsstärke zur ausreichenden Aussteuerung des Kamerasignals und die maximale Drehzahl einer synchron laufenden Multipinholescheibe begrenzt.

### Zum Stand der Technik

Verfahren nach dem Oberbegriff von Anspruch 1 und entsprechende Vorrichtungen sind aus den folgenden Druckschriften bekannt:
- WO 2014/ 125 037 A1
- WO 2012/ 083 967 A1
- WO 2010/ 145 669 A1
- M. Noguchi M., S.K. Nayar S. K., "Microscopic shape from focus using a projected illumination pattern", Mathematical and Computer Modelling, Volume 24, Issues 5-6 (1996), Pages 31-48,ISSN 0895-7177, https://doi.org/10.1016/0895-7177(96)00114-8
- US 6 229 913 B1
- DE 10 2015 209 410 A1.

Im diesem Stand der Technik sind die transparenten Bereiche der Beleuchtungsmaske eckig.

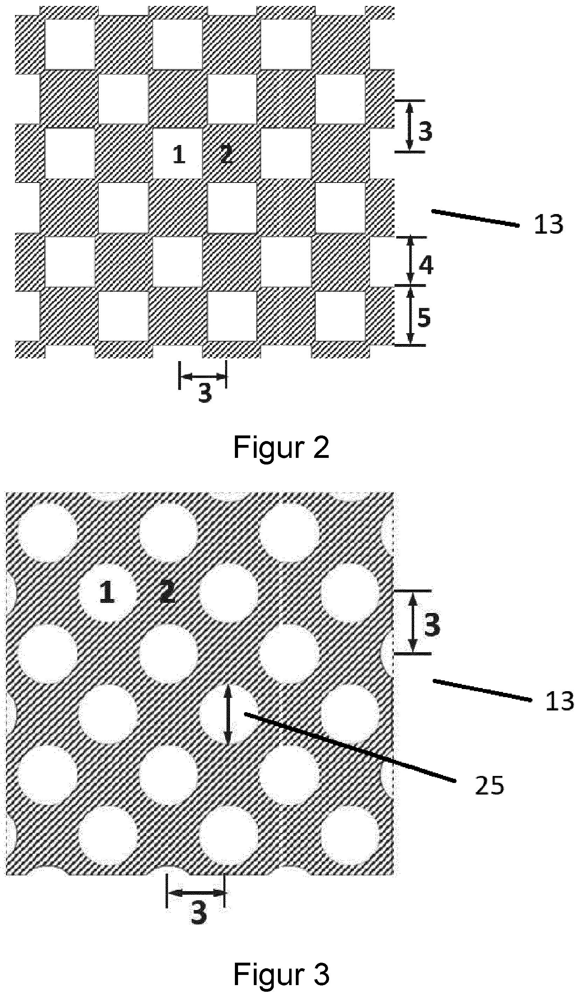

Wenn als Konfokalfilter ein Pinholemuster mit rechteckigen transparenten Bereichen nach Fig.2 als Beleuchtungsmaske eingesetzt wird, entstehen richtungsabhängige Beugungseffekte in der Beleuchtung. Diese führen bei der Bildaufnahme von texturierten Oberflächen zu lokalen Asymmetrien der Lichtintensität beim Fokussieren durch die Oberfläche. Dies begünstigt orientierungsabhängig die Entstehung von Spikes und überhöhter Rauheit der ermittelten 3D-Oberfläche. Dies kann experimentell nachgewiesen werden, indem mehrere Messungen desselben Oberflächenbereichs unter verschiedenen Rotationswinkeln um die optische Achse durchgeführt und die Ergebnisse verglichen werden.

### Aufgabe und Lösung der Erfindung

Der Erfindung liegt die Aufgabe zugrunde, die oben genannten richtungsabhängigen Beugungseffekte zu eliminieren.

Diese Aufgabe wird bei dem Verfahren der eingangs genannten Art erfindungsgemäß dadurch gelöst, dass die transparenten Bereiche (1) der Beleuchtungsmaske (13) rund sind.

### Vorteile der Erfindung

Unter anderem werden die folgenden Vorteile erreicht:
Um die richtungsabhängigen Artefakte zu eliminieren, werden Pinholemuster mit runden transparenten Bereichen nach Fig.3 vorgeschlagen. Hierdurch wird die Richtungsabhängigkeit der Beugungseffekte am einzelnen Pinhole aufgehoben, wodurch auf der Probe die gewünschten symmetrisch-runden Airy-Patterns entstehen.

Diese Erfindung reduziert die Umsetzung der konfokalen Flächenerfassung auf die wesentlichen Elemente, erhöht die optische Transparenz des Gesamtsystems erheblich und hebt die bisherige Limitierung der praktisch umsetzbaren Messgeschwindigkeit auf.

Vorteilhafte Ausgestaltungen der Erfindung sind in den Unteransprüchen angeführt.

So wird vorgeschlagen, dass sich weder zwischen der Beleuchtungsmaske (13) und dem Strahlteiler (14) noch zwischen dem Kamerasensor und dem Strahlteiler (14) eine abbildende Optik befindet.

Weiter wird vorgeschlagen, dass die Abbildungsoptik (6) während der Aufnahme eines Bildstapels aus konfokalen Bildern durch die Probe (7) hindurch fokussiert, wobei die Lage des jeweiligen Fokusposition in die Bestimmung der z-Positionen der Intensitätsmaxima eingeht.

Zur Aufnahme eines 3D-Bildes wird je nach gewünschter Auflösung ein typischerweise 20 bis 1000 Bilder enthaltender Bildstapel (auch Stack genannt) aufgenommen, während der Fokus kontinuierlich in Z- Richtung durch die Probe bewegt wird oder dem entsprechend die Probe durch den Fokus bewegt wird. Die darauf folgende Aufnahme des Bildstapels geschieht entweder in umgekehrter Scanrichtung oder in gleicher Richtung, wobei davor der Fokus möglichst schnell wieder an seine Ursprungsposition bewegt wird. Aus den aufgenommenen Bildstapeln wird für jedes Pixel jeweils der Intensitätsverlauf ausgewertet.

Weiter wird vorgeschlagen, dass es sich bei dem Kamerasensor um einen monochromatischen Sensor handelt, wobei die Intensitätswerte der den nicht oder gering transparenten Bereichen (2) der Beleuchtungsmaske (13) entsprechenden "dunklen" Pixel zunächst invertiert werden und dann die Z-Position der Intensitätsmaxima bestimmt werden, oder die Höhenwerte für die gering transparenten Bereiche der Beleuchtungsmaske (13) aus den Höhenwerten der benachbarten Pixel interpoliert werden.

Wenn eine monochromatische Sensormatrix (Schwarz-Weiß-Kamera) verwendet wird, entsteht in dem aufgenommenen Bildstapel bei benachbarten Pixeln je ein Intensitätssignal mit Intensitätsmaximum bzw. -Minimum im Fokus. In beiden Fällen kann deren Höhenposition z₀ algorithmisch, z.B. mit dem Schwerpunktalgorithmus bestimmt werden. Im Falle der Pixel mit Intensitätsminimum im Fokus werden die Intensitätswerte zunächst invertiert und die Höhenposition z₀ analog zu den Pixeln mit Intensitätsmaximum ermittelt.

Die zusätzliche Auswertung der Pixel mit Intensitätsminimum im Fokus hat den Vorteil, dass auch die normalerweise verworfenen Daten für die Berechnung des 3D-Resultats verwendet werden. Es gehen also doppelt so viele Rohdaten in die Berechnung des 3D-Gesamtresultats ein wie bei der üblichen Auswertung nur der Pixel mit Intensitätsmaximum. Bei geeigneter Nachauswertung kann hierdurch einerseits das Rauschmaß bei identischer Hardware auf 70,7 % des ursprünglichen Wertes (1/Wurzel N) reduziert werden. Da beide jeweils aus Intensitätsmaxima / -Minima ermittelten Teilbilder aufgrund der unterschiedlichen Entstehung auf grundsätzlich unterschiedlichen Basisinformationen beruhen, können besonders in Probenbereichen mit geringer Reflexion durch eine geeignete Kombination beider Resultate benachbarter Pixel mehr gültige Messdaten ermittelt werden. Hierdurch werden die Qualität und die Datendichte der 3D-Ergebnisse verbessert.

Alternativ können die Höhenpositionen z₀ der Pixel mit Intensitätsminimum auch durch Interpolation der Höhenwerte benachbarter Pixel ermittelt werden. Die ermittelte Höhenposition wird für jedes einzelne Pixel ausgegeben.

So kann die Geschwindigkeit der Datenauswertung fast verdoppelt werden.

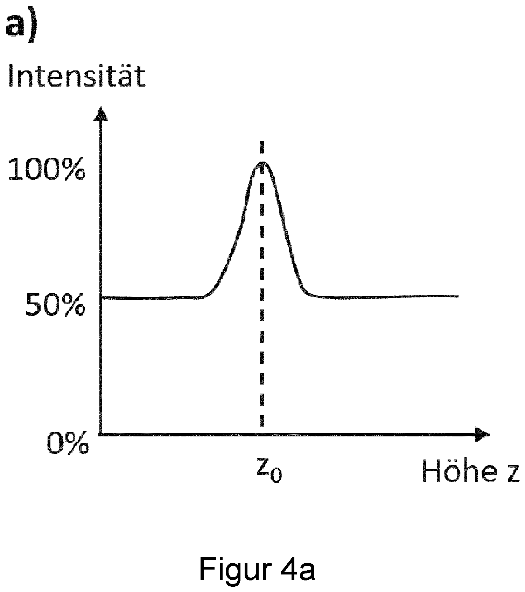

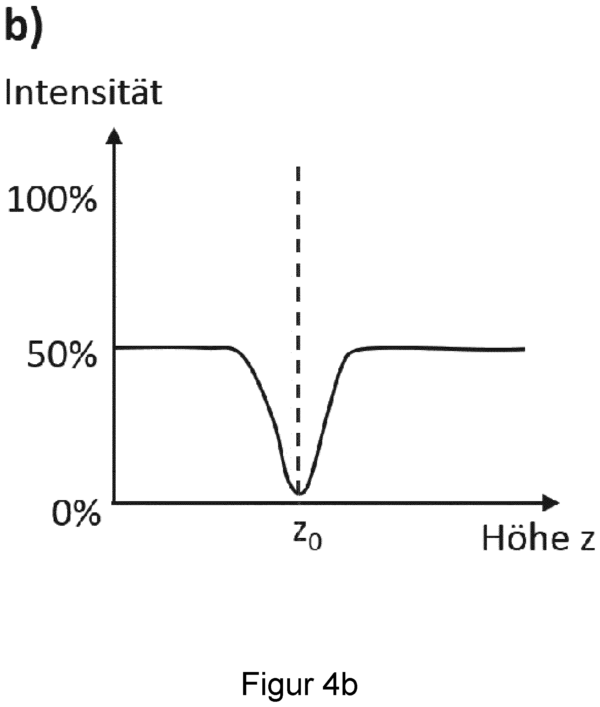

Fig. 4a zeigt das Intensitätssignal eines Pixels für Pixel, auf welche die hoch transparenten Bereiche der Beleuchtungsmaske, und Fig. 4b das Intensitätssignal eines Pixels, auf welche die gering transparenten Bereiche der Beleuchtungsmaske abgebildet werden.

Weiter wird vorgeschlagen, dass es sich bei dem Kamerasensor um einen Farbsensor mit Bayer-Pattern handelt, wobei die den transparenten Bereichen (1) der Beleuchtungsmaske (13) entsprechenden "hellen" Pixel die grünen Pixel (21) sind und für diese Pixel die z-Position des Intensitätsmaximums bestimmt wird, und dass die Höhenwerte für die roten Pixel (23) und blauen Pixel (22) aus den Höhenwerten der benachbarten grünen Pixel (21) interpoliert werden.

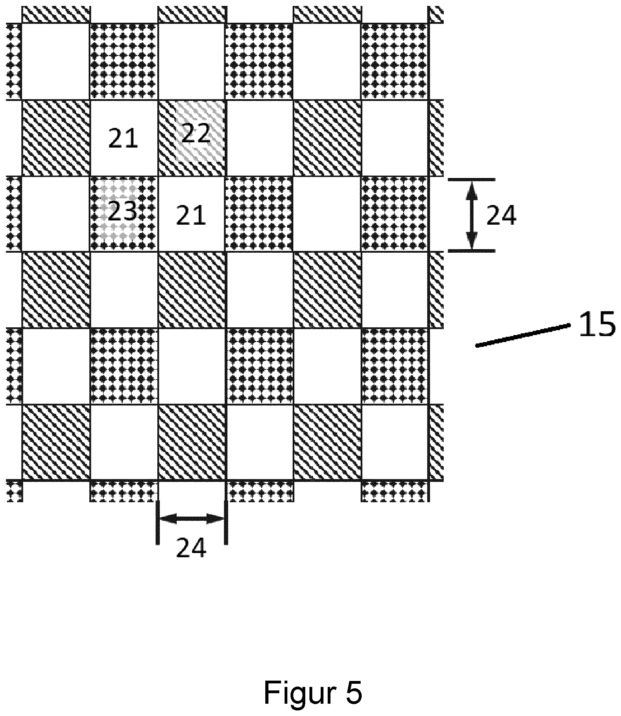

Wird nun eine Weißlichtquelle, z.B. eine weiße LED als Lichtquelle und eine Farb-Sensormatrix mit in Fig. 5 dargestelltem Bayer-Pattern verwendet, wird die Vorrichtung so justiert, dass die transparenten Bereiche der Beleuchtungsmaske den grünen Pixeln der Sensormatrix entsprechen. Somit sind im Fokus nur die grünen Pixel beleuchtet, während die andersfarbigen Pixel "dunkel" sind. Die Höhenposition der Intensitätsmaxima wird dann jeweils für die grünen Pixel bestimmt und für die dazwischen liegenden andersfarbigen Pixel interpoliert.

Ein bekanntes Problem bei der 3D-Auswertung benachbarter Pixel mit unterschiedlicher Farbe ist eine vertikale Verschiebung der ermittelten Höhenposition abhängig von der Wellenlänge. Dies führt zu einem schachbrettartigen Muster im 3D-Resultat, wenn alle Pixel dargestellt werden.

Die ausschließliche Nutzung der "grünen" Pixel zur 3D-Auswertung hat den Vorteil, dass weder wellenlängenabhängige Wechselwirkungen zwischen Licht und Probenoberfläche noch chromatische Aberrationen der Abbildungsoptik zu sichtbaren Artefakten im 3D-Resultat führen.

Weiter wird vorgeschlagen, dass bei der Erzeugung des farbigen Intensitätsbildes die Farbinformationen für die roten Pixel (23) und blauen Pixel (22) aus den Intensitätswerten knapp außerhalb des Fokus bestimmt werden.

Im Fokus ist für die roten und blauen Pixel die Intensität aufgrund des Konfokaleffektes nach Fig. 4b reduziert. Um trotzdem eine korrekte Farbbestimmung zu erreichen, misst man die Intensität knapp außerhalb des Fokus, wo die Unschärfe wenige Pixel beträgt und das Intensitätssignal noch nicht durch den Konfokaleffekt zurück geht.

Für die grünen Pixel wird der Intensitätswert im jeweiligen Fokus verwendet.

Weiter wird vorgeschlagen, dass die Berechnung der Z-Position der Intensitätsmaxima bereits während der Messdatenaufnahme beginnt, wobei die Berechnung der Z-Position der Intensitätsmaxima mit parallelisierten Algorithmen geschieht.

Die konfokale Auswertung wird während der Aufnahme des Bildstapels durchgeführt. Dabei wird jedes Bild auf die Grafikkarte transferiert und dort parallelisiert ausgewertet. Hierdurch ist das resultierende 3D-Bild bereits während der Aufnahme des folgenden Bildstapels verfügbar, darstellbar und speicherbar, wodurch die Latenzzeit zum Erhalt des Ergebnisses nach Abschluss der Aufnahme des Bildstapels typischerweise geringer als die benötigte Zeit zu dessen Aufnahme ist.

Ebenso sind die für die Datenauswertung eingesetzten Ressourcen nach der Berechnung des 3D-Bildes wieder frei, sodass in direktem Anschluss die nächste 3D-Berechnung gestartet werden kann und somit die Bildaufnahme nicht unterbrochen werden muss.

Somit kann bei der Verwendung eines schnellen Kamerasystems mit z.B. einer Framerate von 800 Hz und der Aufnahme von 40 Bildern je Bildstapel eine 3D-Framerate von 20 Hz erreicht werden. Hierdurch können kontinuierlich 3D-Bilder mit Videofrequenz dargestellt und gespeichert werden, ohne dass zwischen der Aufnahme zweier 3D-Bilder eine Wartezeit entsteht. Wenn die zu vermessende Probenoberfläche während der Messdatenaufnahme kontinuierlich mit gleichbleibender Geschwindigkeit bewegt wird, entsteht ein definiert verzerrtes 3D-Bild, welches durch eine geschwindigkeitsbezogene 3D-Kalibrierung in einem Post-Processing-Algorithmus korrigiert werden kann.

### Ausführungsbeispiel

Im Folgenden wird ein Ausführungsbeispiel der Erfindung anhand von Zeichnungen näher beschrieben. In allen Zeichnungen haben gleiche Bezugszeichen die gleiche Bedeutung und werden daher gegebenenfalls nur einmal erläutert.

Es zeigen
- Figur 1: zeigt den prinzipiellen konfokalen Strahlengang,
- Figur 2: eine Beleuchtungsmaske mit schachbrettartig angeordneten rechteckigen transparenten Bereichen (Vergleichsbeispiel),
- Figur 3: eine Beleuchtungsmaske mit schachbrettartig angeordneten runden transparenten Bereichen, entsprechend der Erfindung
- Figur 4: die Intensität beim Fokussieren durch die Probe und
- Figur 5: das Bayer-Pattern einer Farb-Sensormatrix mit Bayer-Pattern.

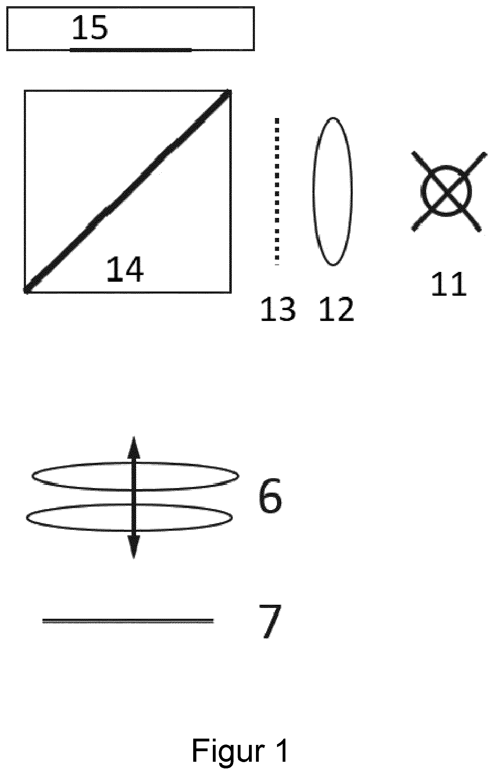

Fig. 1 zeigt den prinzipiellen konfokalen Strahlengang: Eine Lichtquelle (11) illuminiert über einen Kollimator (12) eine Beleuchtungsmaske (13). Diese wird durch den Strahlteiler (14) hindurch mittels einer Abbildungsoptik (6) auf eine zu vermessende Probe (7) abgebildet. Die Probe wird mittels der Abbildungsoptik durch den Strahlteiler hindurch auf eine Sensormatrix (15) abgebildet. Wenn sich die Probe im Fokus befindet, wird das Muster scharf auf die Probe abgebildet und dieses Abbild scharf auf die Sensormatrix abgebildet.

Fig. 2 zeigt eine Beleuchtungsmaske mit schachbrettartig angeordneten rechteckigen transparenten Bereichen: Die transparenten Bereiche (1) mit der Kantenlänge (4) sind wie bei einem Schachbrettmuster mit einem dem Pixelpitch (24) der Sensormatrix entsprechenden Pitch (3) zwischen den gering transparenten Bereichen (2) mit der Kantenlänge (5) angeordnet.

Fig. 3 zeigt eine Beleuchtungsmaske mit schachbrettartig angeordneten runden transparenten Bereichen: Die transparenten Bereiche (1) mit dem Durchmesser (25) sind wie bei einem Schachbrettmuster mit einem dem Pixelpitch (24) der Sensormatrix entsprechenden Pitch (3) zwischen den gering transparenten Bereichen (2) angeordnet.

Fig.4 zeigt die Intensität beim Fokussieren durch die Probe: a) Für die "hellen" Pixel ergibt sich beim Höhenscan im Bereich des Fokus (z₀) eine Erhöhung der Intensität und b) für die anderen Pixel ergibt sich im Fokus (z₀) eine Reduzierung der Intensität. Die Z-Position z₀ für den jeweiligen Extremwert wird ermittelt.

Fig. 5 zeigt das Bayer-Pattern einer Farb- Sensormatrix mit Bayer-Pattern: Zwischen den schachbrettartig diagonal angeordneten grünen Pixeln (21) mit einem Pixelpitch (24), welcher dem Pitch (3) der Beleuchtungsmaske entspricht, liegen die blauen Pixel (22) und die roten Pixel (23).

### Arbeitsweise des erfindungsgemäßen Verfahrens zur optischen Vermessung von technischen Oberflächen

Im Folgenden wird die Arbeitsweise des erfindungsgemäßen Verfahrens zur optischen Vermessung von technischen Oberflächen im Detail erläutert:
Fig. 1 zeigt den grundsätzlichen Aufbau der Erfindung. Eine Lichtquelle (1) wird mittels eines Kollimators kollimiert und beleuchtet eine als Konfokalfilter dienende fest eingebaute Beleuchtungsmaske (13) mit einem Pinholemuster (siehe Fig.2 und Fig.3). Der Pitch des Pinholemusters entspricht dem Pixelpitch der Sensormatrix (15). Mittels Strahlteiler (14) wird das Beleuchtungslicht in Richtung Probe reflektiert und mittels Abbildungsoptik (6) auf die Oberfläche einer Probe (7) fokussiert. Wenn die Probe im Fokus ist, wird die Beleuchtungsmaske (13) scharf auf die Probe abgebildet. Im Detektionsstrahlengang wird die Oberfläche der Probe (7) mittels Abbildungsoptik (6) durch den Strahlteiler (14) auf die Sensormatrix (15) abgebildet. Wenn die Probe im Fokus ist, wird das scharf auf die Probe abgebildete Pinholemuster der Beleuchtungsmaske scharf auf die Sensormatrix abgebildet. Wenn die Probenoberfläche sich außerhalb des Fokusbereichs befindet, wird das Pinholemuster so unscharf, dass es dort nicht mehr erkennbar ist.

Dieser Aufbau kann auch so realisiert werden, dass Beleuchtungsoptik (11) bis (13) und Sensormatrix (15) getauscht werden, also die Beleuchtung in Transmission durch den Strahlteiler geschieht, während die Sensormatrix in Reflexion angeordnet ist.

### Bezugszeichenliste

- 1: transparenter Bereich
- 2: gering transparenter Bereich
- 3: Pitch der Beleuchtungsmaske
- 4: Kantenlänge
- 5: Kantenlänge
- 6: Abbildungsoptik
- 7: Probe
- 11: Lichtquelle
- 12: Kollimator
- 13: Beleuchtungsmaske
- 14: Strahlteiler
- 15: Sensormatrix
- 21: grüne Pixel
- 22: blaue Pixel
- 23: rote Pixel
- 24: Pixelpitch der Sensormatrix
- 25: Durchmesser

## Patentansprüche

1. Verfahren zur optischen Vermessung von technischen Oberflächen mit Hilfe eines konfokalen Sensors, wobei Licht einer Lichtquelle (11) über ein optisches System auf eine zu vermessende Probenoberfläche gerichtet wird,
wobei das optische System eine Beleuchtungsmaske (13), eine Sensormatrix (15), einen Strahlteiler (14) zur Vereinigung von Beleuchtungsstrahlengang und Detektionsstrahlengang und eine Abbildungsoptik (6) enthält, wobei die Beleuchtungsmaske (13) aus schachbrettmusterartig angeordneten transparenten Bereichen (1) und nicht oder gering transparenten Bereichen (2) besteht, wobei der Pitch (3) des Musters auf der Beleuchtungsmaske (13) dem Pixelpitch (24) der Sensormatrix (15) entspricht und wobei die Beleuchtungsmaske (13) und die Sensormatrix (15) so zueinander justiert sind, dass die transparenten Bereiche (1) und die Pixel der Sensormatrix (15) mittels der Abbildungsoptik (6) gleichzeitig scharf auf die Probe (7) abgebildet werden, wodurch dann das scharfe Abbild der Beleuchtungsmaske (13) auf die Sensormatrix (15) scharf abgebildet wird, sodass hier ein schachbrettartiges Muster aus heller und dunkler beleuchteten Pixeln entsteht,
**dadurch gekennzeichnet,**
**dass** die transparenten Bereiche (1) der Beleuchtungsmaske (13) rund sind.

2. Verfahren zur optischen Vermessung von technischen Oberflächen und Vorrichtung zur Durchführung des Verfahrens nach Anspruch 1, **dadurch gekennzeichnet,**
**dass** sich weder zwischen der Beleuchtungsmaske (13) und dem Strahlteiler (14) noch zwischen dem Kamerasensor und dem Strahlteiler (14) eine abbildende Optik befindet.

3. Verfahren zur optischen Vermessung von technischen Oberflächen und Vorrichtung zur Durchführung des Verfahrens nach Anspruch 1,
**dadurch gekennzeichnet,**
**dass** die Abbildungsoptik (6) während der Aufnahme eines Bildstapels aus konfokalen Bildern durch die Probe (7) hindurch fokussiert, wobei die Lage des jeweiligen Fokusposition in die Bestimmung der z-Positionen der Intensitätsmaxima eingeht.

4. Verfahren zur optischen Vermessung von technischen Oberflächen und Vorrichtung zur Durchführung des Verfahrens nach Anspruch 1, **dadurch gekennzeichnet,**
**dass** es sich bei dem Kamerasensor um einen monochromatischen Sensor handelt, wobei die Intensitätswerte der den nicht oder gering transparenten Bereichen (2) der Beleuchtungsmaske (13) entsprechenden "dunklen" Pixel zunächst invertiert werden und dann die Z-Position der Intensitätsmaxima bestimmt werden, oder die Höhenwerte für die gering transparenten Bereiche der Beleuchtungsmaske (13) aus den Höhenwerten der benachbarten Pixel interpoliert werden.

5. Verfahren zur optischen Vermessung von technischen Oberflächen und Vorrichtung zur Durchführung des Verfahrens nach Anspruch 1, **dadurch gekennzeichnet,**
**dass** es sich bei dem Kamerasensor um einen Farbsensor mit Bayer-Pattern handelt, wobei die den transparenten Bereichen (1) der Beleuchtungsmaske (13) entsprechenden "hellen" Pixel die grünen Pixel (21) sind und für diese Pixel die z-Position des Intensitätsmaximums bestimmt wird.

6. Verfahren zur optischen Vermessung von technischen Oberflächen und Vorrichtung zur Durchführung des Verfahrens nach Anspruch 1, **dadurch gekennzeichnet,**
**dass** die Höhenwerte für die roten Pixel (23) und blauen Pixel (22) aus den Höhenwerten der benachbarten grünen Pixel (21) interpoliert werden.

7. Verfahren zur optischen Vermessung von technischen Oberflächen und Vorrichtung zur Durchführung des Verfahrens nach Anspruch 1,
**dadurch gekennzeichnet,**
**dass** bei der Erzeugung des farbigen Intensitätsbildes die Farbinformationen für die roten Pixel (23) und blauen Pixel (22) aus den Intensitätswerten knapp außerhalb des Fokus bestimmt werden.

8. Verfahren zur optischen Vermessung von technischen Oberflächen und Vorrichtung zur Durchführung des Verfahrens nach Anspruch 1,
**dadurch gekennzeichnet,**
**dass** die Berechnung der Z-Position der Intensitätsmaxima bereits während der Messdatenaufnahme beginnt, wobei die Berechnung der Z-Position der Intensitätsmaxima mit parallelisierten Algorithmen geschieht.

9. Vorrichtung zur Durchführung des Verfahrens nach einem der Ansprüche 1 bis 8, wobei die Vorrichtung einen konfokalen Sensor, eine Lichtquelle (11) und ein optisches System umfasst, wobei das optische System eine Beleuchtungsmaske (13), eine Sensormatrix (15), einen Strahlteiler (14) zur Vereinigung von Beleuchtungsstrahlengang und Detektionsstrahlengang und eine Abbildungsoptik (6) enthält, wobei die Beleuchtungsmaske (13) aus schachbrettmusterartig angeordneten transparenten Bereichen (1) und nicht oder gering transparenten Bereichen (2) besteht, wobei der Pitch (3) des Musters auf der Beleuchtungsmaske (13) dem Pixelpitch (24) der Sensormatrix (15) entspricht und wobei die Beleuchtungsmaske (13) und die Sensormatrix (15) so zueinander justierbar sind, dass die transparenten Bereiche (1) und die Pixel der Sensormatrix (15) mittels der Abbildungsoptik (6) gleichzeitig scharf auf eine Probe (7) abbildbar sind, wobei die Vorrichtung als Strahlteiler (14) eine Strahlteilerplatte, einen Strahlteilerquader oder einen Strahlteilerwürfel enthält, **dadurch gekennzeichnet,**
**dass** die transparenten Bereiche (1) der Beleuchtungsmaske (13) rund sind, dass die strahlteilende Beschichtung ein polarisationsneutrales Teilungsverhältnis hat oder polarisierend wirkt, wobei sich bei polarisierender Wirkung zwischen Strahlteiler (14) und Probe (7) eine Lambda-Viertel-Verzögerungsplatte befindet, welche die Polarisationsrichtung des zurück reflektierten Lichtes um 90 Grad dreht.

## Claims

1. Method for optically measuring technical surfaces using a confocal sensor, light from a light source (11) being directed via an optical system onto a sample surface to be measured,
the optical system containing an illumination mask (13), a sensor matrix (15), a beam splitter (14), for combining an illumination beam path and a detection beam path, and imaging optics (6), the illumination mask (13) consisting of transparent regions (1) and non-transparent or slightly transparent regions (2) arranged in a checkerboard pattern, the pitch (3) of the pattern on the illumination mask (13) corresponding to the pixel pitch (24) of the sensor matrix (15) and the illumination mask (13) and the sensor matrix (15) being adjusted relative to one another such that the transparent regions (1) and the pixels of the sensor matrix (15) are simultaneously sharply imaged onto the sample (7) by means of the imaging optics (6), whereby the sharp image of the illumination mask (13) is then sharply imaged onto the sensor matrix (15) so that a checkerboard pattern of light and dark illuminated pixels is produced on the sensor matrix,
**characterized in that**
the transparent regions (1) of the illumination mask (13) are round.

2. Method for optically measuring technical surfaces, and device for carrying out the method according to claim 1,
**characterized in that**
there are no imaging optics either between the illumination mask (13) and the beam splitter (14) or between the camera sensor and the beam splitter (14).

3. Method for optically measuring technical surfaces, and device for carrying out the method according to claim 1,
**characterized in that**
the imaging optics (6) focus through the sample (7) during the acquisition of an image stack of confocal images, the position of the relevant focus position being included in the determination of the z-positions of the intensity maxima.

4. Method for optically measuring technical surfaces, and device for carrying out the method according to claim 1,
**characterized in that**
the camera sensor is a monochromatic sensor, the intensity values of the "dark" pixels corresponding to the non-transparent or slightly transparent regions (2) of the illumination mask (13) being first inverted and then the Z-position of the intensity maxima being determined, or the height values for the slightly transparent regions of the illumination mask (13) being interpolated from the height values of the adjacent pixels.

5. Method for optically measuring technical surfaces, and device for carrying out the method according to claim 1,
**characterized in that**
the camera sensor is a color sensor with a Bayer pattern, the "bright" pixels corresponding to the transparent regions (1) of the illumination mask (13) being the green pixels (21), and the z-position of the intensity maximum being determined for these pixels.

6. Method for optically measuring technical surfaces, and device for carrying out the method according to claim 1,
**characterized in that**
the height values for the red pixels (23) and blue pixels (22) are interpolated from the height values of the adjacent green pixels (21).

7. Method for optically measuring technical surfaces, and device for carrying out the method according to claim 1,
**characterized in that**
when generating the colored intensity image, the color information for the red pixels (23) and blue pixels (22) is determined from the intensity values just outside the focus.

8. Method for optically measuring technical surfaces, and device for carrying out the method according to claim 1,
**characterized in that**
the calculation of the Z-position of the intensity maxima already begins during the measurement data acquisition, the calculation of the Z-position of the intensity maxima being carried out using parallelized algorithms.

9. Device for carrying out the method according to any of claims 1 to 8, the device comprising a confocal sensor, a light source (11) and an optical system, the optical system containing an illumination mask (13), a sensor matrix (15), a beam splitter (14), for combining an illumination beam path and a detection beam path, and imaging optics (6), the illumination mask (13) consisting of transparent regions (1) and non-transparent or slightly transparent regions (2) arranged in a checkerboard pattern, the pitch (3) of the pattern on the illumination mask (13) corresponding to the pixel pitch (24) of the sensor matrix (15) and the illumination mask (13) and the sensor matrix (15) being adjusted relative to one another such that the transparent regions (1) and the pixels of the sensor matrix (15) can be simultaneously sharply imaged onto a sample (7) by means of the imaging optics (6), the device containing a beam splitter plate, a beam splitter cuboid or a beam splitter cube as a beam splitter (14),
**characterized in that**
the transparent regions (1) of the illumination mask (13) are round, **that** the beam-splitting coating has a polarization-neutral splitting ratio or has a polarizing effect, a lambda-quarter retardation plate being located between the beam splitter (14) and the sample (7) in the case of a polarizing effect, which plate rotates the polarization direction of the reflected light by 90 degrees.

## Revendications

1. Procédé pour la mesure optique de surfaces techniques à l'aide d'un capteur confocal, dans lequel la lumière d'une source de lumière (11) est dirigée sur une surface d'échantillon à mesurer par l'intermédiaire d'un système optique,
dans lequel le système optique contient un masque d'éclairage (13), une matrice de capteurs (15), un séparateur de faisceaux (14) permettant de réunir une trajectoire de faisceau d'éclairage et une trajectoire de faisceau de détection, et une optique de reproduction (6), dans lequel le masque d'éclairage (13) est constitué de zones transparentes (1) et de zones peu transparentes (2) ou non transparentes disposées selon un modèle en damier, dans lequel le pas (3) du modèle sur le masque d'éclairage (13) correspond au pas de pixel (24) de la matrice de capteurs (15) et dans lequel le masque d'éclairage (13) et la matrice de capteurs (15) sont ajustés l'un par rapport à l'autre de sorte que les zones transparentes (1) et les pixels de la matrice de capteurs (15) sont reproduits simultanément de manière nette sur l'échantillon (7) au moyen de l'optique de reproduction (6), moyennant quoi la reproduction nette du masque d'éclairage (13) est ensuite reproduite de manière nette sur la matrice de capteurs (15), de sorte qu'un modèle en damier constitué de pixels éclairés de manière plus claire et plus sombre se forme,
**caractérisé en ce**
**que** les zones transparentes (1) du masque d'éclairage (13) sont rondes.

2. Procédé pour la mesure optique de surfaces techniques et dispositif pour la mise en œuvre du procédé selon la revendication 1,
**caractérisés en ce**
**qu**'une optique à reproduction n'existe ni entre le masque d'éclairage (13) et le séparateur de faisceaux (14), ni entre le capteur de caméra et le séparateur de faisceaux (14).

3. Procédé pour la mesure optique de surfaces techniques et dispositif pour la mise en œuvre du procédé selon la revendication 1,
**caractérisés en ce**
**que** l'optique de reproduction (6) se focalise à travers l'échantillon (7) pendant la capture d'une pile d'images à partir d'images confocales, dans lesquels le positionnement de la position de focalisation respective entre dans la détermination des positions z des maxima d'intensité.

4. Procédé pour la mesure optique de surfaces techniques et dispositif pour la mise en œuvre du procédé selon la revendication 1,
**caractérisés en ce**
**que** le capteur de caméra est un capteur monochromatique, dans lesquels les valeurs d'intensité des pixels « sombres » correspondant aux zones peu transparentes (2) ou non transparentes du masque d'éclairage (13) sont d'abord inversées puis la position Z des maxima d'intensité est déterminée, ou les valeurs de hauteur pour les zones peu transparentes du masque d'éclairage (13) sont interpolées à partir des valeurs de hauteur des pixels voisins.

5. Procédé pour la mesure optique de surfaces techniques et dispositif pour la mise en œuvre du procédé selon la revendication 1,
**caractérisés en ce**
**que** le capteur de caméra est un capteur de couleur à motif de Bayer, dans lesquels les pixels « clairs » correspondant aux zones transparentes (1) du masque d'éclairage (13) sont les pixels verts (21) et la position z du maximum d'intensité est déterminée pour lesdits pixels.

6. Procédé pour la mesure optique de surfaces techniques et dispositif pour la mise en œuvre du procédé selon la revendication 1,
**caractérisés en ce**
**que** les valeurs de hauteur pour les pixels rouges (23) et les pixels bleus (22) sont interpolées à partir des valeurs de hauteur des pixels verts (21) voisins.

7. Procédé pour la mesure optique de surfaces techniques et dispositif pour la mise en œuvre du procédé selon la revendication 1,
**caractérisés en ce**
**que,** lors de la génération de l'image d'intensité colorée, les informations de couleur pour les pixels rouges (23) et les pixels bleus (22) sont déterminées à partir des valeurs d'intensité juste en dehors du foyer.

8. Procédé pour la mesure optique de surfaces techniques et dispositif pour la mise en œuvre du procédé selon la revendication 1,
**caractérisés en ce**
**que** le calcul de la position Z des maxima d'intensité commence déjà pendant la capture de données de mesure, dans lesquels le calcul de la position Z des maxima d'intensité se fait avec des algorithmes parallélisés.

9. Dispositif pour la mise en oeuvre du procédé selon l'une des revendications 1 à 8, dans lequel le dispositif comprend un capteur confocal, une source de lumière (11) et un système optique, dans lequel le système optique contient un masque d'éclairage (13), une matrice de capteurs (15), un séparateur de faisceaux (14) permettant de réunir une trajectoire de faisceau d'éclairage et une trajectoire de faisceau de détection, et une optique de reproduction (6), dans lequel le masque d'éclairage (13) est constitué de zones transparentes (1) et de zones peu transparentes (2) ou non transparentes disposées selon un modèle en damier, dans lequel le pas (3) du modèle sur le masque d'éclairage (13) correspond au pas de pixel (24) de la matrice de capteurs (15) et dans lequel le masque d'éclairage (13) et la matrice de capteurs (15) peuvent être ajustés l'un par rapport à l'autre de sorte que les zones transparentes (1) et les pixels de la matrice de capteurs (15) peuvent être reproduits simultanément de manière nette sur un échantillon (7) au moyen de l'optique de reproduction (6), dans lequel le dispositif contient comme séparateur de faisceaux (14) une plaque séparatrice de faisceaux, un parallélépipède séparateur de faisceaux ou un cube séparateur de faisceaux,
**caractérisé en ce**
**que** les zones transparentes (1) du masque d'éclairage (13) sont rondes, **que** le revêtement séparateur de faisceaux présente un rapport de division neutre en termes de polarisation ou présente un effet polarisant, dans lequel une lame à retard lambda quart se trouve, en cas d'effet polarisant, entre le séparateur de faisceaux (14) et l'échantillon (7), laquelle tourne de 90 degrés la direction de polarisation de la lumière réfléchie en retour.
